# EUROPÄISCHE PATENTSCHRIFT

(11) **EP 0 727 914 B1**
(45) Veröffentlichungstag und Bekanntmachung des Hinweises auf die Patenterteilung: **12.05.2004**
(21) Anmeldenummer: 96101121.0
(22) Anmeldetag: 26.01.1996
(51) Int. Cl.: H04Q 7/38, H04Q 7/22

(54) **Verfahren zum Aufbau einer Anrufverbindung für einen Gruppenanruf zu einer Gruppe von Mobilfunkteilnehmern in einem Mobilfunknetz**
Method for establishing a call to a group of mobiles in a mobile communication network
Procédé d'éstablissement d'appel vers un groupe de mobiles dans un réseau de communication mobile

(30) Priorität: 16.02.1995 DE 19505270
(43) Veröffentlichungstag der Anmeldung: 21.08.1996
(73) Patentinhaber: SIEMENS AKTIENGESELLSCHAFT, 80333 München (DE)
(72) Erfinder: Dettner, Harald, D-35274 Kirchhain (DE)

(56) Entgegenhaltungen:
- WO-A-93/05622
- WO-A-94/28687
- PATENT ABSTRACTS OF JAPAN vol. 095, no. 002, 31 March 1995 & JP 06 311555 A (NEC COMMUN SYST LTD), 4 November 1994

## Beschreibung

Verfahren zum Aufbau einer Anrufverbindung für einen Gruppenanruf zu einer Gruppe von Mobilfunkteilnehmern in einem Mobilfunknetz

Die Erfindung betriff ein Verfahren zum Aufbau einer Anrufverbindung für einen von einem anrufenden Teilnehmer ausgelösten Gruppenanruf zu einer Gruppe von Mobilfunkteilnehmern in einem Mobilfunknetz.

Bei einem in einem Mobilfunknetz nach dem GSM-Standard (Global System for Mobile Communication) ankommenden Anruf (Mobile Originated Call) wird zunächst eine spezielle Teilnehmerdatenbank, das sogenannte Heimatregister (Home Location Register) zur Speicherung der Teilnehmerdaten aller Mobilfunkteilnehmer, von einer Mobilvermittlungsstelle (Mobile Switching Center) abgefragt. Das Heimatregister fordert seinerseits von einem für den angerufenen Mobilfunkteilnehmer zuständigen Besucherregister (Visitor Location Register) dessen momentanen Aufenthaltsort an, der anhand einer Teilnehmerstationsnummer (Mobile Station Roaming Number), die an das Heimatregister zurückgesendet wird, erkennbar ist. Diese Nummer wird zur anfordernden Mobilvermittlungsstelle rückgesendet, die die weitere Verbindung zu der Mobilvermittlungsstelle aufbaut, die ein Aufenthaltsgebiet betreut, das für den angerufenen Mobilfunkteilnehmer gerade zuständig ist. Ein derartiges Verfahren zum Aufbau der Anrufverbindung für im Mobilfunknetz ankommende Anrufe ist in dem Aufsatz "D900- Mobile Communication System", System Description SYD, Siemens AG, 1992 (Bestellnummer A30808-X3231-X-2-7618) im Kapitel 8.2.2, Seite 62 beschrieben.

Darüber hinaus wird von der für den angerufenen Zielteilnehmer zuständigen Mobilvermittlungsstelle eine internationale Teilnehmeridentifikationsnummer (International Mobile Subscriber Identity) für den weiteren Verbindungsaufbau benutzt.

Zur Informations- und Datenübertragung besteht zwischen den Einrichtungen des nach dem GSM-Verfahren arbeitenden Mobilfunknetzes ein genormtes Signalisierungsprotokoll (Mobile Application Part), nach dem die jeweilige Anrufverbindung für ankommende und abgehende Anrufe aufzubauen ist.

Bei einem sogenannten Gruppenanruf (Dispatcher Originated Call), bei dem eine Anrufverbindung zu einer Gruppe von Mobilfunkteilnehmern des Mobilfunknetzes aufgebaut werden soll, beispielsweise von einem Einsatzleiter an eine Mehrzahl von an einem bekannten Einsatzort befindlichen Mitarbeitern, müßte das bestehende Signalisierungsprotokoll nach dem GSM-Standard zu diesem Zweck benutzt und modifiziert werden. Typisch für Gruppenanrufe ist die Tatsache, daß ein lokales Aufenthaltsgebiet (Service Area) im zellular aufgebauten Mobilfunknetz der vom Anruf betroffenen Gruppe von Mobilfunkteilnehmern zugeordnet werden kann. Dies bedeutet, daß in dem für die angerufene Gruppe von Mobilfunkteilnehmern zuständigen Besucherregister nach lokalem Aufenthaltsgebiet und nach der jeweiligen Gruppe unterschieden werden muß, was in Bezug auf die Bereitstellung der Teilnehmerstationsnummer und der internationalen Teilnehmeridentifikationsnummer zu mehr Aufwand und gegebenenfalls zu Schwierigkeiten im bestehenden Verfahrensablauf nach GSM-Standard führen könnte.

Daher ist es Aufgabe der vorliegenden Erfindung, ein Verfahren der eingangs genannten Art zu schaffen, durch das eine Anrufverbindung für einen Gruppenanruf zu einer Gruppe von Mobilfunkteilnehmern möglichst einfach und ohne Eingriff in das bestehende Signalisierungsprotokoll des GSM-Standards hergestellt werden kann.

Diese Aufgabe wird durch die Merkmale des Patentanspruchs 1 gelöst. Weiterbildungen der Erfindung sind in Unteransprüchen angegeben.

Der die Gruppe von Mobilfunkteilnehmern anrufende Teilnehmer wählt eine Teilnehmerrufnummer mit Ziffern zur Kennzeichnung des Anrufs als Gruppenanruf, die von einer Mobilvermittlungsstelle im Mobilfunknetz empfangen wird. Die Ziffern der Teilnehmerrufnummer werden auf das Vorliegen einer Gebietsinformation zur Identifikation des lokalen Aufenthaltsgebiets, in dem sich Mobilfunkteilnehmer der angerufenen Gruppe befinden, und auf das Vorliegen einer Gruppeninformation zur Identifikation der angerufenen Gruppe ausgewertet. Nach der Auswertung der Ziffern der für den Gruppenanruf gewählten Teilnehmerrufnummer werden die Gebietsinformation und die Gruppeninformation direkt zu einer im Aufenthaltsgebiet für die angerufene Gruppe zuständigen Ziel-Mobilvermittlungsstelle übertragen, von der der weitere Verbindungsaufbau für den Gruppenanruf anhand der empfangenen Informationen veranlaßt wird.

Dadurch, daß eine einfache Ziffernbewertung einer für Gruppenanrufe speziellen Teilnehmerrufnummer im Mobilfunknetz unabhängig vom Abruf der Aufenthaltsdaten der Mobilfunkteilnehmer aus den jeweiligen Registern - Heimatregister und/oder Besucherregister - des Mobilfunknetzes durchgeführt wird, braucht das bestehende Signalisierungsprotokolls nicht modifiziert zu werden, und die damit zusammenhängenden Probleme der Numerierung, Adressierung und Identifikationsbehandlung können somit vermieden werden. Die im GSM-Mobilfunknetz vorgesehenen Heimat- und Besucherregister bleiben von der Anrufverbindung für Gruppenanrufe völlig unbeeinflußt. Die Zeit zum Aufbau der Anrufverbindung nach dem Verfahren der Erfindung kann gegenüber der gewöhnlichen Dauer des Verbindungsaufbaus unter Einbeziehung des Signalisierungsprotokolls nach dem GSM-Standard verkürzt werden, da die Register nicht abgefragt werden. Außerdem ist zusätzlich zum bestehenden Signalisierungsprotokoll kein eigenes neues Protokoll notwendig, da die für den Aufbau der Anrufverbindung (Routing) erforderliche Gebietsinformation in der vom anrufenden Teilnehmer gewählten und übermittelten Teilnehmerrufnummer durch Auswertung der zugehörigen Ziffern in der jeweiligen Mobilvermittlungsstelle, die die Anrufverbindung letztendlich veranlaßt, ohne weiteres zur Verfügung steht.

Gemäß einer Weiterbildung der Erfindung werden die Ziffern der Teilnehmerrufnummer von jeder Mobilvermittlungsstelle dezentral ausgewertet, die die dem Gruppenanruf zugrundeliegende Teilnehmerrufnummer im Mobilfunknetz empfängt. Diese Mobilvermittlungsstelle ist nach einer anderen Weiterbildung der Erfindung jeweils die Zugangs-Mobilvermittlungsstelle im Mobilfunknetz, die Anrufe von Fernsprechteilnehmern anderer Kommunikationsnetze - beispielsweise des öffentlichen Fernsprechnetzes - entgegennimmt.

Gemäß einer anderen Weiterbildung der Erfindung werden die Ziffern der Teilnehmerrufnummer von der Mobilvermittlungsstelle ausgewertet, die für einen den Gruppenanruf initiierenden Mobilfunkteilnehmer zuständig ist. Damit ist die Mobilvermittlungsstelle, die den vom Mobilfunkteilnehmer ausgelösten Gruppenanruf entgegennimmt, selbst die Auswerteeinrichtung zum Erkennen eines Gruppenanrufs.

Besonders vorteilhaft ist es, wenn die Ziffern von der die Teilnehmerrufnummer empfangenden Mobilvermittlungsstelle im Mobilfunknetz an eine gesonderte Mobilvermittlungsstelle zur zentralen Auswertung übertragen werden. Diese eine gesonderte Mobilvermittlungsstelle ist damit die einzige Vermittlungseinrichtung im Mobilfunknetz, die für die Auswertung der Ziffern der speziellen Teilnehmerrufnummer für den Gruppenanruf und damit im Rahmen des Verbindungsaufbaus für Gruppenanrufe zuständig ist. Dies führt gegenüber der Lösung mit der Möglichkeit der dezentralen Auswertung durch mehrere Mobilvermittlungsstellen im Mobilfunknetz zu Einsparungen beim Speicher- und Steuerungsaufwand zur Auswertung der speziellen Teilnehmerrufnummer.

Die Auswertung der Ziffern bezüglich des Vorliegens eines Gruppenanrufs wird gemäß einer Weiterbildung der Erfindung durch mindestens eine in die Teilnehmerrufnummer jeweils eingegebene Steuerinformation veranlaßt, die gemäß einer bevorzugten Ausführungsform aus einer virtuellen Registernummer bestehen kann, die keinem der im Mobilfunknetz verwendeten Heimatregister für die Speicherung der Teilnehmerdaten der Mobilfunkteilnehmer zugeordnet ist.

Die Erfindung wird anhand eines in Figuren dargestellten Ausführungsbeispiels erläutert. Im einzelnen zeigen
- Figur 1: die vom Verbindungsaufbau für Gruppenanrufe betroffenen Einrichtungen eines digitalen Mobilfunknetzes bei dezentraler Auswertung der Teilnehmerrufnummer,
- Figur 2: die von dem Verbindungsaufbau für Gruppenanrufe betroffenen Einrichtungen des digitalen Mobilfunknetzes bei zentraler Auswertung der Teilnehmerrufnummer und
- Figur 3: den Aufbau der Teilnehmerrufnummer für Gruppenanrufe.

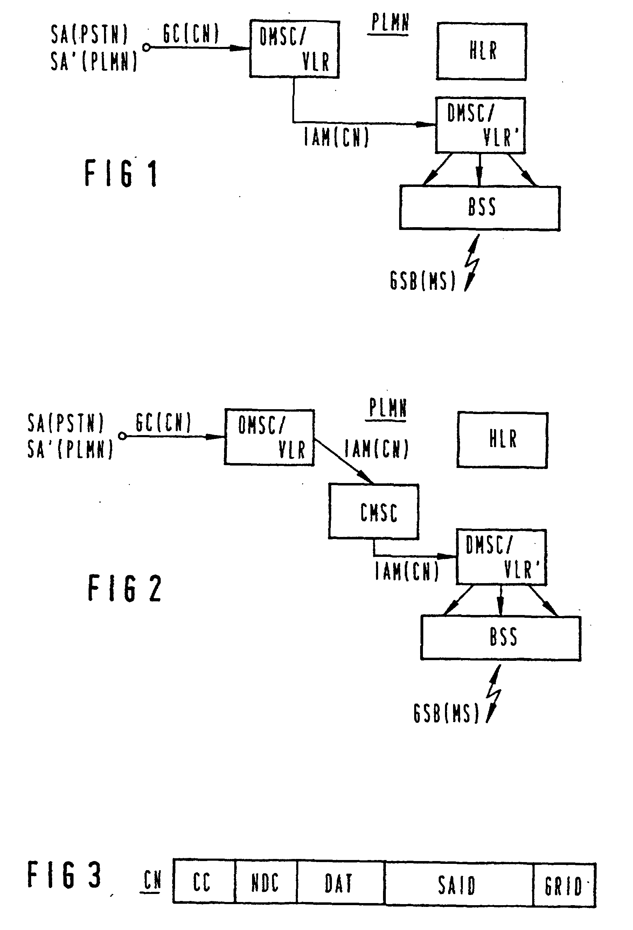

Figur 1 zeigt Einrichtungen eines Mobilfunknetzes PLMN zum Aufbau einer Anrufverbindung für einen Gruppenanruf GC, der von einem anrufenden Mobilfunkteilnehmer SA' desselben Mobilfunknetzes PLMN oder eines anderen Mobilfunknetzes bzw. von einem anrufenden Fernsprechteilnehmer SA eines leitungsgebundenen Kommunikationsnetzes PSTN zu einer Gruppe von Mobilfunkteilnehmern GSB mit zugehörigen mobilen Teilnehmerstationen MS ausgelöst, d.h. initiiert wird. Das digitale, zellular aufgebaute Mobilfunknetz PLMN nach dem GSM-Standard verfügt über eine Mobilvermittlungsstelle OMSC mit zugehörigem Besucherregister VLR, die als Zugangs-Mobilvermittlungsstelle (Gateway Mobile Switching Center) auch Anrufe aus anderen Kommunikationsnetzen im Mobilfunknetz PLMN empfängt. Für den Fall, daß der an die Gruppe von Mobilfunkteilnehmern GSB gerichtete Gruppenanruf GC von dem anrufenden Mobilfunkteilnehmer SA' des Mobilfunknetzes PLMN gesendet wird, stellt die Mobilvermittlungsstelle OMSC die für diesen Mobilfunkteilnehmer SA' zuständige Vermittlungseinrichtung dar.

An die Mobilvermittlungsstelle OMSC ist eine Ziel-Mobilvermittlungsstelle DMSC mit zugehörigem Besucherregister VLR' angeschlossen, die für die von dem Gruppenanruf betroffene Gruppe von Mobilfunkteilnehmern GSB verantwortlich ist. Mit der Ziel-Mobilvermittlungsstelle DMSC ist ein Basisstationssytem BSS verbunden, das Basissteuereinrichtungen und Basissende-/Empfangseinrichtungen aufweist, mit denen eine Funkübertragung der Informationen über die Luftschnittstelle zu den mobilen Teilnehmerstationen MS der angerufenen Gruppe von Mobilfunkteilnehmern GSB möglich ist. Der Vollständigkeit halber ist in Figur 1 ein Heimatregister HLR zur Speicherung der Teilnehmerdaten aller Mobilfunkteilnehmer des Mobilfunknetzes PLMN dargestellt, das jedoch bei dem Aufbau der Anrufverbindung zu der vom Gruppenanruf GC betroffenen Gruppe von Mobilfunkteilnehmern GSB gemäß der Erfindung nicht betroffen ist.

Von dem anrufenden Mobilfunkteilnehmer SA' bzw. von dem anrufenden Fernsprechteilnehmer SA wird der Gruppenanruf GC durch Wahl einer Teilnehmerrufnummer CN begonnen, die Ziffern zur Kennzeichnung des Anrufs als Gruppenanruf gemäß Figur 3 enthält. Von jeder als Zugangs-Mobilvermittlungsstelle oder als Mobilvermittlungsstelle, die für den anrufenden Teilnehmer SA bzw. SA' verantwortlich ist, arbeitenden Mobilvermittlungsstelle OMSC im Mobilfunknetz PLMN werden die Ziffern der eintreffenden Teilnehmerrufnummer CN auf das Vorliegen einer Gebietsinformation zur Identifikation des lokalen Aufenthaltsgebiets, dem die Ziel-Mobilvermittlungsstelle DMSC zugeordnet ist, ausgewertet. Darüber hinaus wird von der Ziel-Mobilvermittlungsstelle DMSC eine Gruppeninformation zur Identifikation der angerufenen Gruppe aus der empfangenen Teilnehmerrufnummer CN abgeleitet, die zwar nicht für den Verbindungsaufbau (Routing) erforderlich ist, jedoch zum Auffinden der richtigen Gruppe des Gruppenanrufs verwendet wird.

In einer nach dem standardisierten Übertragungsprotokoll festgelegten Adressennachricht IAM (Initial Adress Message), wird die die Gruppeninformation und die Gebietsinformation enthaltende Teilnehmerrufnummer CN von der Mobilvermittlungsstelle OMSC zur Ziel-Mobilvermittlungsstelle DMSC direkt übertragen, von der der weitere Aufbau der Anrufverbindung für den Gruppenanruf GC anhand der empfangenen Gebietsinformation veranlaßt wird. Der Verbindungsaufbau, beginnend bei der Ziel-Mobilvermittlungsstelle DMSC über das Basisstationssystem BSS zu den einzelnen mobilen Teilnehmerstationen MS der Gruppe von Mobilfunkteilnehmern GSB erfolgt in bekannter Art und Weise nach dem standardisierten GSM-Verfahren.

Durch einfache Ziffernauswertung der für den Gruppenanruf GC festgelegten speziellen Teilnehmerrufnummer CN kann die Anrufverbindung zu einer Gruppe von Mobilfunkteilnehmern GSB hergestellt werden, ohne daß das Heimatregister HLR und das Besucherregister VLR bzw. VLR' mit dem bei dem gewöhnlichen Verbindungsaufbau erforderlichen genormten Signalisierungsprotokoll zur Abfrage der lokalen Aufenthaltsparameter benötigt wird. Die Ziel-Mobilvermittlungsstelle DMSC kann unmittelbar nach dem Empfang der Informationen aus der Teilnehmerrufnummer CN mit dem Aufbau der Anrufverbindung beginnen, ohne daß ein Informationsaustausch mit dem zugehörigen Besucherregister VLR' noch durchgeführt zu werden braucht, da die für den Aufbau notwendigen Informationen Teil der dem Gruppenanruf GC zugrundeliegenden Teilnehmerrufnummer CN sind und in der Adressennachricht IAM bereits übermittelt wurden.

Figur 2 zeigt ebenso die in Figur 1 dargestellten Einrichtungen des Mobilfunknetzes PLMN, wobei zwischen der Mobilvermittlungsstelle OMSC und der Ziel-Mobilvermittlungsstelle DM-SC zusätzlich eine gesonderte Mobilvermittlungsstelle CMSC zur zentralen Auswertung der in der für Gruppenanrufe GC vorgesehenen Teilnehmerrufnummer CN enthaltenen Ziffern angeordnet ist. Der von dem anrufenden Teilnehmer SA des leitungsgebundenen Kommunikationsnetzes PSTN - beispielsweise des öffentlichen Fernsprechnetzes - bzw. der von dem anrufenden Mobilfunkteilnehmer SA' ausgelöste Gruppenanruf GC mit der zugehörigen Teilnehmerrufnummer CN wird von der Mobilvermittlungsstelle OMSC empfangen. In der Adressennachricht IAM wird von ihr die Teilnehmerrufnummer CN an die gesonderte Mobilvermittlungsstelle CMSC weitergeleitet, die die eintreffenden Ziffern auf das Vorliegen der Gebietsinformation für die jeweils angerufene Gruppe von Mobilfunkteilnehmern GSB zentral auswertet.

Die Teilnehmerrufnummer CN wird in einer weiteren Adressennachricht IAM von der gesonderten Mobilvermittlungsstelle CM-SC an die Ziel-Mobilvermittlungsstelle DMSC direkt übertragen, von der der weitere Aufbau der Anrufverbindung für den Gruppenanruf GC über das Basisstationssystem BSS und die Luftschnittstelle zu den mobilen Teilnehmerstationen MS der Mobilfunkteilnehmer GSB der angerufenen Gruppe initiiert wird. Die an zentraler Stelle im Mobilfunknetz PLMN angeordnete gesonderte Mobilvermittlungsstelle CMSC ist somit die einzige Vermittlungseinrichtung im Mobilfunknetz, die für den Aufbau der Anrufverbindung zu den Mobilfunkteilnehmern GSB der angerufenen Gruppe verantwortlich ist.

Figur 3 zeigt den Aufbau der von dem anrufenden Teilnehmer ausgelösten Teilnehmerrufnummer CN zur Kennzeichnung des Anrufs als Gruppenanruf zu einer Gruppe von Mobilfunkteilnehmern, deren Aufenthaltsgebiet - bezogen auf die dafür zuständige Mobilvermittlungsstelle - dem anrufenden Teilnehmer bekannt ist. Die Ziffern der Teilnehmerrufnummer CN werden zunächst in bekannter Weise in der Reihenfolge eingegeben, daß am Anfang eine internationale Länderkennzahl CC (Country Code) und anschließend eine nationale Kennzahl NDC (National Destination Code) gewählt werden. Die Teilnehmerrufnummer CN weist darüber hinaus Steuerinformationen DAT auf, die die Auswertung der Ziffern bezüglich des Vorliegens eines Gruppenanrufs durch die Mobilvermittlungsstelle veranlaßt. Diese Steuerinformationen DAT enthalten am einfachsten eine virtuelle Registernummer, die keinem der für die Speicherung der Teilnehmerdaten aller Mobilfunkteilnehmer im Mobilfunknetz tatsächlich verwendeten Heimatregister zugeordnet werden kann. Es ist quasi eine virtuelle Heimatregisterkennzahl. Die Routing-Information zur Festlegung, daß die Anrufverbindung an dem Heimatregister vorbeigeht und direkt von der Ziel-Mobilvermittlungsstelle hergestellt wird, besteht aus der Gebietsinformation zur Identifikation des jeweiligen lokalen Aufenthaltsgebiets der der Gruppe zugehörigen Mobilfunkteilnehmer. Die Gruppeninformation zur Identifikation der jeweils angerufenen Gruppe, umfassend eine Vielzahl von als Zielteilnehmer nicht einzeln, sondern als Gruppe erreichbaren Mobilfunkteilnehmer, dient der Ziel-Mobilvermittlungsstelle als Auswahlinformation.

## Patentansprüche

1. Verfahren zum Aufbau einer Anrufverbindung für einen Gruppenanruf (GC), der von einem anrufenden Teilnehmer (SA bzw. SA') an eine Gruppe von Mobilfunkteilnehmern (GSB) eines Mobilfunknetzes (PLMN) gerichtet wird, bei dem
- von dem anrufenden Teilnehmer (SA bzw. SA') eine Teilnehmerrufnummer (CN) mit Ziffern zur Kennzeichnung des Anrufs als Gruppenanruf gewählt wird,
- die Teilnehmerrufnummer (CN) im Mobilfunknetz (PLMN) von einer Mobilvermittlungsstelle (OMSC) empfangen und die Ziffern der Teilnehmerrufnummer (CN) auf das Vorliegen einer Gebietsinformation (SAID) zur Identifikation eines lokalen Aufenthaltsgebiets, in dem sich Mobilfunkteilnehmer (GSB) der angerufenen Gruppe befinden, und auf das Vorliegen einer Gruppeninformation (GRID) zur Identifikation der angerufenen Gruppe ausgewertet werden und bei dem
- nach der Auswertung die Gebietsinformation (SAID) und die Gruppeninformation (GRID) direkt zu einer für die angerufene Gruppe im Aufenthaltsgebiet zuständigen Ziel-Mobilvermittlungsstelle (DMSC) übertragen wird, von der der Aufbau der Anrufverbindung für den Gruppenanruf anhand der empfangenen Gebietsinformation (SAID) und Gruppeninformation (GRID) veranlaßt wird.

2. Verfahren nach Anspruch 1,
**dadurch gekennzeichnet,**
**daß** die Auswertung der Ziffern der Teilnehmerrufnummer (CN) von der jeweils die Teilnehmerrufnummer (CN) empfangenden Mobilvermittlungsstelle (OMSC) dezentral durchgeführt wird.

3. Verfahren nach Anspruch 2,
**dadurch gekennzeichnet,**
**daß** die Ziffern der Teilnehmerrufnummer (CN) von der Mobilvermittlungsstelle ausgewertet werden, die für einen anrufenden Mobilfunkteilnehmer (SA') zuständig ist.

4. Verfahren nach Anspruch 1,
**dadurch gekennzeichnet,**
**daß** von der die Teilnehmerrufnummer (CN) empfangenden Mobilvermittlungsstelle (OMSC) die Ziffern der Teilnehmerrufnummer (CN) an eine gesonderte Mobilvermittlungsstelle (CMSC) übertragen werden, von der die Ziffern zentral ausgewertet werden.

5. Verfahren nach einem der vorhergehenden Ansprüche,
**dadurch gekennzeichnet,**
**daß** in die Teilnehmerrufnummer (CN) mindestens eine Steuerinformation (DAT) eingegeben wird, anhand der die Auswertung der Ziffern in Bezug auf das Vorliegen eines Gruppenanrufs veranlaßt wird.

6. Verfahren nach Anspruch 5,
**dadurch gekennzeichnet,**
**daß** die Steuerinformation (DAT) aus einer virtuellen Registernummer besteht, die keinem der zur Speicherung der Teilnehmerdaten der Mobilfunkteilnehmer im Mobilfunknetz (PLMN) jeweils verwendeten Heimatregister (HLR) zuordenbar ist.

7. Verfahren nach einem der Ansprüche 1 bis 6,
**dadurch gekennzeichnet,**
**daß** der Gruppenanruf (GC) von einem Mobilfunkteilnehmer (SA') an die Gruppe von Mobilfunkteilnehmern (GSB) gerichtet wird.

8. Verfahren nach einem der Ansprüche 1 bis 6,
**dadurch gekennzeichnet,**
**daß** der Gruppenanruf (GC) von einem Fernsprechteilnehmer (SA) eines leitungsgebundenen Kommunikationsnetzes (PSTN) an die Gruppe von Mobilfunkteilnehmern (GSB) gerichtet und von einer im Mobilfunknetz (PLMN)für ankommende Anrufe aus anderen Kommunikationsnetzen verwendeten Zugangs-Mobilvermittlungsstelle empfangen wird.

## Claims

1. Method for establishing a connection for a group call (GC) directed by a calling subscriber (SA or SA') to a mobile subscriber group (GSB) in a mobile communication network (PLMN), where
- the calling subscriber (SA or SA') dials a subscriber call number (CN) with digits for identifying the call as a group call,
- the subscriber call number (CN) in the mobile communication network (PLMN) is received by a mobile switching center (OMSC) and the digits in the subscriber call number (CN) are evaluated for the presence of service area information (SAID) to identify a local service area in which mobile subscribers (GSB) of the called group are located, and for the presence of group information (GRID) to identify the called group, and where
- after evaluation the area information (SAID) and group information (GRID) are transmitted directly to the destination mobile switching center (DMSC) responsible for the called group in the service area, and this switching center then causes the connection for the group call to be established with the aid of the incoming area information (SAID) and group information (GRID).

2. Method according to Claim 1, **characterized in that** evaluation of the digits in the subscriber call number (CN) is carried out on a decentralized basis by the mobile switching center (OMSC) receiving the subscriber call number (CN) in each case.

3. Method according to Claim 2, **characterized in that** the digits in the subscriber call number (CN) are evaluated by the mobile switching center that is responsible for a calling mobile subscriber (SA').

4. Method according to Claim 1, **characterized in that** the mobile switching center (OMSC) which receives the subscriber call number (CN) transmits the digits in the subscriber call number (CN) to a separate mobile switching center (CMSC) which evaluates the digits centrally.

5. Method according to one of the preceding claims, **characterized in that** at least one item of control information (DAT) is entered in the subscriber call number (CN) and is used to evaluate the digits for the presence of a group call.

6. Method according to Claim 5, **characterized in that** the control information (DAT) consists of a virtual register number which cannot be assigned to any home location register (HLR) used for storing the data of the mobile subscribers in the mobile communication network (PLMN).

7. Method according to one of Claims 1 to 6, **characterized in that** the group call (GC) is directed by a mobile subscriber (SA') to the mobile subscriber group (GSB).

8. Method according to one of Claims 1 to 6, **characterized in that** the group call (GC) is directed by a telephone subscriber (SA) from a fixed line communication network (PSTN) to the mobile subscriber group (GSB) and is received by a gateway mobile switching center used in the mobile communication network (PLMN) for incoming calls from other communication networks.

## Revendications

1. Procédé pour établir une liaison d'appel pour un appel de groupe (GC) adressé par un abonné source de l'appel (SA resp. SA') à un groupe d'abonnés radio mobiles (GSB) d'un réseau radio mobile (PLMN) dans lequel
- un numéro d'appel d'abonné (CN) comprenant des chiffres pour identifier l'appel en tant qu'appel de groupe est composé par l'abonné source de l'appel (SA resp. SA'),
- le numéro d'appel d'abonné (CN) est reçu dans le réseau radio mobile (PLMN) par un centre de commutation mobile (OMSC) et les chiffres du numéro d'appel d'abonné (CN) sont évalués pour y détecter la présence d'une information de zone (SAID) pour l'identification d'une zone de localisation locale dans laquelle se trouvent des abonnés radio mobiles (GSB) du groupe cible de l'appel ainsi que la présence d'une information de groupe (GRID) pour l'identification du groupe cible de l'appel et
- l'information de zone (SAID) et l'information de groupe (GRID) sont directement transmises, après l'évaluation, vers un centre de commutation mobile cible (DMSC) compétent pour le groupe cible de l'appel dans la zone de localisation, lequel provoque l'établissement de la liaison d'appel pour l'appel de groupe sur la base de l'information de zone (SAID) et de l'information de groupe (GRID) reçues.

2. Procédé selon la revendication 1, **caractérisé en ce que** l'évaluation des chiffres du numéro d'appel d'abonné (CN) est opérée de façon décentralisée par le centre de commutation mobile (OMSC) recevant respectivement le numéro d'appel d'abonné (CN).

3. Procédé selon la revendication 2, **caractérisé en ce que** les chiffres du numéro d'appel d'abonné (CN) sont évalués par le centre de commutation mobile qui est compétent pour un abonné radio mobile (SA') source de l'appel.

4. Procédé selon la revendication 1, **caractérisé en ce que** les chiffres du numéro d'appel d'abonné (CN) sont transmis par le centre de commutation mobile (OMSC) recevant le numéro d'appel d'abonné (CN) à un centre de commutation mobile distinct (CMSC) qui évalue les chiffres de façon centralisée.

5. Procédé selon l'une des revendications précédentes, **caractérisé par** l'introduction, dans le numéro d'appel d'abonné (CN), d'au moins une information de contrôle (DAT) sur la base de laquelle est provoquée l'évaluation des chiffres pour y détecter la présence d'un appel de groupe.

6. Procédé selon la revendication 5, **caractérisé en ce que** l'information de contrôle (DAT) est composée d'un numéro d'enregistrement virtuel qui ne peut être associé à aucun des enregistreurs de localisation nominaux (HLR) utilisés pour l'enregistrement des données abonnés des abonnés radio mobiles dans le réseau radio mobile (PLMN).

7. Procédé selon l'une des revendications 1 à 6, **caractérisé en ce que** l'appel de groupe (GC) est adressé par un abonné radio mobile (SA') au groupe d'abonnés radio mobiles (GSB).

8. Procédé selon l'une des revendications 1 à 6, **caractérisé en ce que** l'appel de groupe (GC) est adressé par un abonné téléphonique (SA) d'un réseau de communication flaire (PSTN) au groupe d'abonnés radio mobiles (GSB) et est reçu par une passerelle de centre de commutation mobile utilisée dans le réseau radio mobile (PLMN) pour des appels venant d'autres réseaux de communication.
